# EUROPEAN PATENT SPECIFICATION

(11) **EP 3 992 088 B1**
(45) Date of publication and mention of the grant of the patent: **19.06.2024**
(21) Application number: 21192892.4
(22) Date of filing: 24.08.2021
(51) Int. Cl.: B64D 45/02, F16B 19/10, F16B 33/00, B64D 37/32, B64D 37/06

(54) **BLIND FASTENERS**
JALOUSIEBEFESTIGER
FIXATIONS EN AVEUGLE

(30) Priority: 27.10.2020 GB 202017005
(43) Date of publication of application: 04.05.2022
(73) Proprietor: Airbus Operations Limited, Bristol BS34 7PA (GB)
(72) Inventor: WEBSTER, Matthew, Bristol, BS34 7PA (GB); CROSS, Matthew, Bristol, BS34 7PA (GB); FAY, Andrew, Bristol, BS34 7PA (GB)
(74) Representative: Ribeiro, James Michael

(56) References cited:
- EP-A1- 1 600 645
- US-A- 5 175 665
- US-A1- 2006 078 399
- US-A1- 2012 160 960

## Description

### TECHNICAL FIELD

The present invention relates to blind fasteners, and to assemblies, fuel tanks and aircraft comprising such blind fasteners.

### BACKGROUND

There is an increasing trend towards manufacturing aircraft structures from composite materials. In an aircraft, composite structures are typically fastened to each other and/or to metal structures using metal fasteners. Composite materials used for aerostructures are typically much less conductive than metal, at least under the normal operating conditions of an aircraft. Electric charge which travels on and in a composite structure may arc from the composite structure to an adjacent metal fastener or structure if the current density exceeds the current carrying ability of the joint between the composite structure and the metal fastener/structure.

When lightning strikes such an aircraft, a large charge is placed on the composite structure. When the charge arcs from the composite structure to a metal fastener or structure, a very large amount of energy is expended over a short period of time. The air around the arc is heated up by this energy, as is the composite structure. The heating of the composite structure may be sufficient to instantaneously vaporize small particles of the composite material. Alternatively or additionally, particles of the composite material and/or the metal fastener may become glowing hot and break off. The energy of the lightning strike is often sufficient to eject these particles, in the form of sparks, to a metre or more from the arcing location.

If such arcing were to occur in a fuel tank, there would be a risk that the sparks could ignite the fuel or any fuel vapors. Aircraft in which the fuel tanks are at least partially formed by composite structures must therefore include mechanisms for preventing ignition of fuel in the event of a lightning strike.
US5175665 A relates to composite structures and more particularly although not exclusively carbon fibre composite structures utilising bolted attachments which are particularly susceptible to the injurious effects of lightning strikes.
EP1600645 A1 describes a fastener for fastening a first component and second component to each other and electrically insulate them from each other while maintaining the advantages of a blind nut able to fasten the first component and second component securely from one side.
US 2006/078399 A1 describes a blind nut installed in a structural joint provides an interference fit and a fatigue enhancing benefit to the structural joint. A bolt can be inserted into the nut for additional shear strength and shear continuity. During installation in the structural joint, a first flange of the nut is seated against a first structural member, an installation tool is inserted into a passage in the nut, and the tool is operated to buckle a collapsible portion of the nut to form a second flange on a second structural member.

### SUMMARY

A first aspect of the present invention provides a blind fastener according to appended claim 1, which is configured to be installed in a bore of a given length. The blind fastener comprises a sleeve member configured to deform during installation of the blind fastener; a bolt member at least partially received within the sleeve member; and an electrically insulating member fixedly disposed on the sleeve member. The sleeve member has a predefined outer surface region that is arranged to be disposed within the bore after installation of the blind fastener. The insulating member and the sleeve member are mutually configured such that the insulating member is present on a first sub-region of the predefined outer surface region and is not present on a second sub-region of the predefined outer surface region. Each of the first and second sub-regions comprises a complete circumference of the sleeve member.

Optionally, the first sub-region is relatively nearer to a tail end of the blind fastener.

Optionally, a diameter of the first sub-region is smaller than the diameter of the second sub-region, by an amount substantially equal to a thickness of the insulating member.

Optionally, a diameter of the second-sub region is substantially equal to an outer diameter of the insulating member.

Optionally, the sleeve member has a deformable section that is configured to deform during installation of the blind fastener,

Optionally, the outer surface of the deformable section does not overlap the predefined outer surface region.

Optionally, the blind fastener is moveable between a pre-installation configuration in which the sleeve member is undeformed and a tail end of the sleeve member has a first axial position relative to the bolt member, and a post-installation configuration in which the sleeve member is deformed and the tail end of the sleeve member has a second, different axial position relative to the bolt member.

Optionally, the insulating member is elastically deformable or is plastically deformable.

Optionally, the predefined outer surface region of the sleeve member comprises a surface feature shaped to match the shape of an edge of the insulating member which is disposed on the predefined outer surface region.

Optionally, the surface feature and the edge are mutually configured to maintain close contact therebetween, during and after installation of the blind fastener.

Optionally, the surface feature and the edge comprise one or more of: matching tapered portions; matching steps; interlocking features configured to resist relative axial movement of the insulating member and the sleeve member.

Optionally, a tail end of the insulating member is open.

Optionally, the tail end of the insulating member is closed such that the tail end of the bolt member and the tail end of the sleeve member are enclosed within the insulating member.

The bolt member has a head end, on which a head is formed. The head may have a larger diameter than the rest of the bolt member.

Optionally, a top surface of a head of the sleeve member abuts a lower surface of a head of the bolt member.

The bolt member has a head end, on which a head is formed; and the second sub-region is relatively nearer to the head end of the bolt member than the first sub-region.

A second aspect of the invention provides an assembly comprising:
a structure having a bore connecting a first side of the structure to a second side of the structure; and
a blind fastener according to the first aspect installed in the bore.

Optionally, an end part of the insulating member nearest the head end of the blind fastener is disposed within the bore.

Optionally, an outer surface of the part of the insulating member which is disposed within the bore is in close contact with the bore, and the second sub-region of the predefined outer surface region of the sleeve member is in close contact with the bore.

Optionally, the structure comprises a first sub-structure and a second-substructure fastened together by the blind fastener.

Optionally, a head of the blind fastener abuts the first sub-structure and a tail of the blind fastener abuts the second sub-structure, and an axial length of the first sub-region is less than a thickness of the second sub-structure.

Optionally, the structure comprises a composite material. Optionally, the structure further comprises a metallic material.

A third aspect of the invention provides a fuel tank comprising a blind fastener according to the first aspect, and/or an assembly according to the second aspect.

An aircraft comprising a blind fastener according to the first aspect, an assembly according to the second aspect, or a fuel tank according to the third aspect.

### BRIEF DESCRIPTION OF THE DRAWINGS

Embodiments of the invention will now be described, by way of example only, with reference to the accompanying drawings, in which:
Figures 1a and 1b are schematic cross-sections through a first example blind fastener according to the invention, in pre-installation and post-installation configurations;
Figures 2a and 2b are schematic cross-sections through example matching sleeve member and insulating member features suitable for example blind fasteners according to the invention;
Figures 3a and 3b are schematic cross-sections through a second example blind fastener according to the invention, in pre-installation and post-installation configurations;
Figure 4 is a schematic cross-section through an example fuel tank according to the invention; and
Figure 5 is a perspective view of an example aircraft according to the invention.

### DETAILED DESCRIPTION

The examples of the invention described in the following discussion relate to blind fasteners. Each blind fastener according to the invention is configured to be installed in a bore of a given length, and has a sleeve member, a bolt member and an electrically insulating member. The sleeve member is configured to deform during installation of the blind fastener, and has a predefined outer surface region that is arranged to be disposed within the bore after installation of the blind fastener. The bolt member is at least partially disposed within the sleeve member, and the insulating member is fixedly disposed on the sleeve member. The insulating member and the sleeve member are mutually configured such that the insulating member is present on a first sub-region of the predefined outer surface region and is not present on a second sub-region of the predefined outer surface region. Each of the first and second sub-regions comprises a complete circumference of the sleeve member.

Sparking between a fastener and a structure on which it is installed typically happens under the nut (or the formed tail, in the case of a blind fastener). Conventionally, such sparking is prevented by insulating the fastener-structure interface by applying a coating of paint or another insulating material to the structure. However; it has been found that such coatings frequently become damaged during the process of installing a fastener, requiring every fastener location in a fuel vapour zone on an aircraft to be inspected after fastener installation. Such inspection is time consuming, and generally will not be possible in applications where blind fasteners have been used (typically because a back side of the structure the fastener is being installed onto is not accessible, either for manipulating a nut or for inspecting the fastener tail and surrounding structure). Blind fasteners according to the invention advantageously provide a solution for reliably ensuring that an intact insulating barrier is present between the formed tail of the fastener and the structure after the fastener has been installed, so that sparking is prevented.

In particular, in the post-installation configuration of an example fastener according to the invention, the insulating member completely covers the region of the sleeve member that would otherwise be in contact with a surface of the structure onto which that fastener has been installed. Contact between the sleeve member and the adjacent surface of the structure is thereby prevented, which prevents sparking between the tail of the fastener and the structure in the event of a lightning strike. The insulating member is sufficiently robust that its integrity is guaranteed to be maintained during the process of installing the fastener, eliminating the need to inspect the tail end of the fastener. Furthermore, the requirement to apply an insulating coating to the structure is eliminated. Advantageously, the configuration of the fasteners according to the invention is such that the insulating member ends up in the required position as a consequence of the normal installation process of the fastener, so no additional operations are needed during an assembly process.

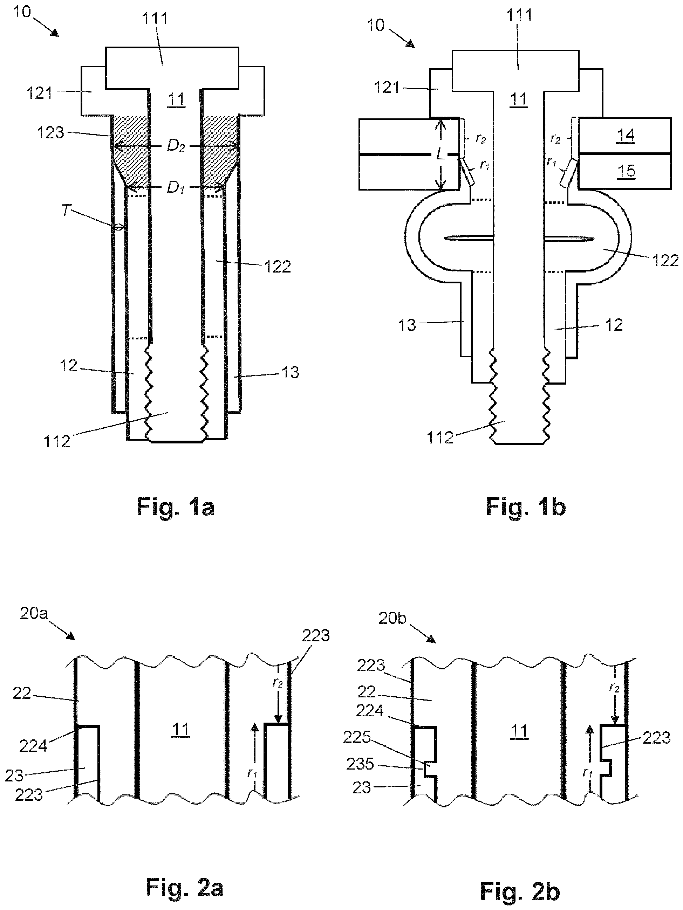

Figures 1a and 1b are cross-sections through an example blind fastener 10 according to the invention. The blind fastener 10 is moveable between a pre-installation configuration (shown in Figure 1a) and a post-installation configuration (shown in Figure 1b). Examples of suitable blind fasteners on which an insulating member can be provided to form a blind fastener according to the present invention include the OSI-Bolt (R) manufactured by Monogram Aerospace Fasteners; Composi-Lok (R) manufactured by Monogram Aerospace Fasteners; Radial-Lok (R) manufactured by Monogram Aerospace Fasteners; Ergotech (R) manufactured by Arconic; and Optiblind (TM) manufactured by Lisi Aerospace. Although the illustrated fastener 10 is a protruding-head fastener, other examples are possible in which the blind fastener 10 has a countersink head.

In Figure 1b the fastener 1 is installed in a bore formed in a structure made up of a first sub-structure 14 and a second sub-structure 15. The combination formed by the blind fastener 10 installed on the substructures 14, 15 may be considered to be an assembly. The bore has an axial length *L*, and the fastener 10 is configured to be installed in a bore having the particular axial length *L*, which is equal to the thickness of the structure. The first and second sub-structures 14, 15 are held together by the blind fastener 10. The first and second structures 14, 15 may both be formed from a composite material, or they may both be formed from a metallic material, or it may be the case that one of the first and second structures 14, 15 is formed from a composite material and the other of the first and second structures 14, 15 is formed from a metallic material. In some examples the first and second structures 14, 15 are aircraft structures. For example, the first structure 14 may be a wing cover panel and the second structure 15 may be a spar.

The fastener 10 comprises a bolt member 11, a sleeve member 12, and an insulating member 13. The bolt member 11 and sleeve member 12 may be formed from any suitable material having material properties suitable to withstand the operational loads expected to be experienced by the blind fastener 10. The material of the sleeve member 12 (or at least a deformable section thereof) must be able to deform during installation of the fastener 10 in the manner described below.

The bolt member 11 is at least partially received within the sleeve member 12. The bolt member 11 has a head end 111, on which a head is formed. The head has a larger diameter than the rest of the bolt member 11. The end of the bolt member 11 opposite to the head end is referred to as the tail end 112. The sleeve member 12 may also be considered to have a head end (that is, the end of the sleeve member nearest the head of the bolt member 11) and a tail end (that is, the end of the sleeve member nearest the tail end of the bolt member 11). In the illustrated example, the sleeve member 12 comprises a head 121 at the head end. The head 121 of the sleeve member 12 has a larger diameter than the rest of the sleeve member 12, and a larger diameter than the bore into which the blind fastener 10 is configured to be installed.

Note that the bolt member 11 is at least partially received within the sleeve member 12 when the sleeve member is an un-deformed state, as shown in Figure 1a.

In the illustrated example, a screw thread is present on the circumferential surface of the bolt member 11 at and/or near the tail end 112. The screw thread on the bolt member 11 is engaged with a corresponding screw thread provided on the inner surface of the tail end of the sleeve member 12. The function of the threaded engagement between the bolt member 11 and the sleeve member 12 is to drive relative axial movement of the bolt member 11 and sleeve member 12 in response to relative rotational movement of the bolt member 11 and sleeve member 12. It should be noted that other blind fasteners according to the invention may not comprise a threaded engagement between the bolt member and the sleeve member, and instead some other mechanism of driving relative axial movement of the bolt member and sleeve member may be provided for. For example, the bolt member 11 may be configured to be pulled upwardly by an externally applied pulling force during installation of the fastener 10, whilst the sleeve member 12 is held stationary. In other examples, the relative axial movement may be driven in some other way, for instance by rotating or pulling the sleeve member 12.

The sleeve member 12 has a predefined outer surface region 123 (corresponding to the outer surface of the shaded part of the sleeve member 12 as shown on Figure 1a) that is arranged to be disposed within the bore after installation of the blind fastener 10. The predefined outer surface region 123 extends around the full circumference of the sleeve member 12 such that it forms a closed loop. The axial length of the predefined outer surface region is equal to or slightly less than the length *L* of the bore into which the blind fastener 10 is configured to be installed. The predefined outer surface region 123 is positioned to ensure that it will be disposed within the bore after installation of the fastener 10. In particular, the predefined outer surface region begins immediately below (according to the orientation shown in Figures 1a and 1b) the head 121 of the sleeve member 12. The significance of the predefined outer surface region 123 will become apparent from detailed discussion below of the insulating member 13.

The sleeve member 12 is configured to deform during installation of the blind fastener. In particular, the sleeve member is configured to transition from the undeformed shape shown in Figure 1a to the deformed shape shown in Figure 1b. In the illustrated example the sleeve member 12 comprises a deformable section 122. The deformed shape of the deformable section 122 of the sleeve member 12 has a greater maximum diameter than the undeformed shape of the deformable section 122. In some examples the maximum diameter of the deformed shape of the deformable region 122 is greater than or equal to the diameter of the head 121 of the sleeve member 12. The diameter of the head 121 and the maximum diameter of the deformed shape of the deformable section 122 are each larger than the diameter of the bore in which the fastener 10 is being installed.

The deformable section 122 begins just below the predefined outer surface region 123 and extends towards the tail end of the sleeve member 12. The outer surface of the deformable section 122 does not overlap the predefined outer surface region 123. The axial distance between the head 121 and the head end of the deformable section 122 may be substantially equal to *L.* The deformable section 122 ends above the threaded part of the sleeve member 12. The axial length of the deformable section 122 may be selected in dependence on the particular intended application of the blind fastener 10. For example, a relatively longer deformable section 122 may result in a deformed shape having a relatively greater diameter, but relatively lower strength than a relatively shorter deformable section 122. The deformable section 122 may comprise weakened areas at one or more selected locations (for example the locations of the dotted lines in Figures 1a and 1b) to ensure that buckling of the sleeve member 12 occurs at these locations, in a predictable manner. Part or all of the deformable section 122 may have different material properties to the rest of the sleeve member 12. For example, part or all of the deformable section 122 may be less brittle than the rest of the sleeve member 12.

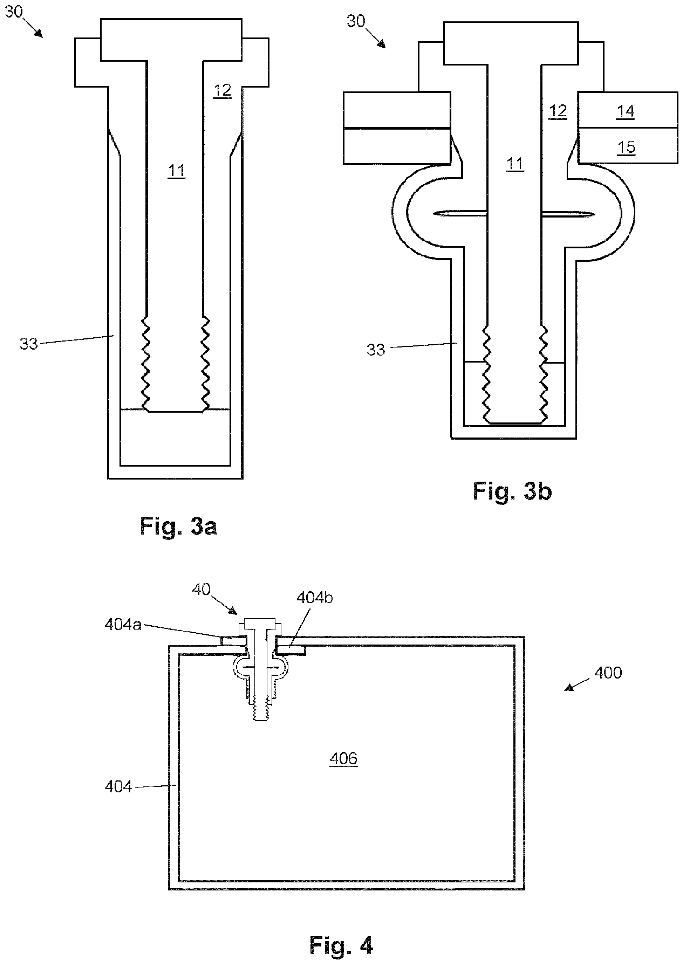

The insulating member 13 is fixedly disposed on the sleeve member 12. In particular, the insulating member 13 is disposed circumferentially around at least part of the sleeve member 12. Relative movement of the insulating member 13 and sleeve member 12 is substantially prevented by the fixation technique used to fixedly dispose the insulating member 13 on the sleeve member 12. The axial length of the insulating member 13 is less than the axial length of the sleeve member 12. In the illustrated example, the insulating member 13 is tubular and the sleeve member 12 extends from both ends of the insulating member 13. In other examples (such as the example of Figures 3a and 3b discussed below) the insulating member 13 may have a different form. The outer diameter of the insulating member 13, in the pre-installation configuration, is less than or equal to the diameter of the bore into which the fastener 10 is configured to be installed. The outer diameter of the insulating member 13 in the pre-installation configuration may advantageously be slightly less than the diameter of the bore, to enable the blind fastener 10 to easily be inserted into the bore. However; preferably the outer surface of the part of the insulating member 13 which is disposed within the bore after installation of the fastener 10 is in close contact with the bore after such installation. In some examples the outer surface of the insulating member 13 may be a low-friction surface, to facilitate insertion of the fastener 10 into the bore.

The insulating member 13 is deformable, to enable it to accommodate the deformation of the sleeve member 12 which takes place during installation of the fastener 10. In some examples the insulating member 13 is elastically deformable. In other examples the insulating member 13 is plastically deformable. In some examples, the length of the insulating member 13 may be greater in the post-installation configuration than in the pre-installation configuration, due to stretching of the insulating member 13 during the installation process. The insulating member 13 may be formed from any suitable electrically insulating material. For example, the insulating member 13 may comprise a polymer material. The insulating member 13 may comprise a reinforced polymer material. The insulating member 13 may comprise a thermoplastic material. Suitable materials may include Nylon, acrylonitrile butadiene styrene (ABS), polyethylene, thermoplastic elastomer (TPE or TPE) or another polymer material, optionally fabric reinforced. The material of the insulating member 13 is selected such that it is robust enough to maintain its structural integrity during installation and subsequent operation of the fastener 10, and is also electrically insulating enough to prevent sparking between the sleeve member 12 and the second sub-structure 15 in the event of a lightning strike.

Any suitable fixation or retention mechanism may be used to fix the insulating member 13 on the sleeve member 12. In the illustrated example, the insulating member 13 is fixed on the sleeve member 12 by friction, by virtue of the insulating member 13 being an interference fit on the sleeve member 12. The interference fit generates enough friction to substantially prevent relative movement of the insulating member 13 and sleeve member 12 during installation and subsequent operation of the blind fastener 10. A small amount of local slippage may occur between one or more parts of the insulating member 13 and abutting parts of the sleeve member 12 during the deformation of the sleeve member 12, however the overall relative axial position of the insulating member 13 and sleeve member 12 should not change during the deformation process. In some examples the insulating member 12 may be bonded to the sleeve member 12. Alternatively or additionally, the insulating member 13 could be fixed on the sleeve member 12 by a mechanical interlock, as will be described below with reference to Figure 2b. Suitable mechanisms for fixing the insulating member 13 on the sleeve member 12 include (but are not limited to) an interference fit, an adhesive bond, a snap-fit joint, a thermoplastic weld, a fastener or other mechanical means.

The insulating member 13 and the sleeve member 12 are mutually configured such that the insulating member 13 is present on a first sub-region *r₁* of the predefined outer surface region 123 and is not present on a second sub-region *r₂* of the predefined outer surface region 123. This is the case in both the pre-installation and the post-installation configuration of the blind fastener 10. Each of the first and second sub-regions *r₁, r₂* comprises a complete circumference of the sleeve member 12. The first sub-region *r₁* is relatively nearer to the tail end of the blind fastener 10 and the second sub-region *r₂* is relatively nearer to the head end of the blind fastener 10. The second sub-region *r₂* is also relatively nearer to the head end 111 of the bolt member than the first sub-region *r₁.* As a result, the second sub-region *r₂* is positioned between the head end 111 of the bolt member and the first sub-region *r₁.*

When the fastener 10 is installed in the bore, the first sub-region *r₁* is adjacent only the second sub-structure 15 and the second sub-region *r₂* is adjacent both of the first and second sub-structures 14, 15. This means that the sleeve member 12 is in direct contact with both of the first and second sub-structures 14, 15. In examples in which the structure comprises two (or more) sub-structures, it is important that the sleeve member 12 is in direct and close contact with each of the sub-structures. Consequently, the axial length of the first sub-region *r₁* is always less than the thickness of the sub-structure against which the formed tail of the fastener lies (that is, the bottommost sub-structure according to the orientation shown in Figure 1b).

A diameter D2 of the second-sub region *r₂* is substantially equal to an outer diameter of the insulating member 13, and also substantially equal to the diameter of the bore in which the blind fastener 10 is configured to be installed. After installation of the fastener 10 in the bore, the second-sub region is therefore in close contact with the bore. A diameter D1 of the first sub-region *r₁* is smaller than the diameter D2 of the second sub-region *r₂*, by an amount substantially equal to the thickness *t* of the insulating member 13. In particular, a smallest diameter of the first sub-region *r₁* is smaller than the diameter of the second sub-region *r₂*, by an amount substantially equal to the thickness *t* of the insulating member 13. In the illustrated example, the first sub-region *r₁* comprises a tapered portion. The diameter of the first sub-region *r₁* increases constantly over the axial length of the tapered portion, from the smallest diameter described above to a largest diameter, which is equal to the diameter of the second sub-region *r₂*. The angle of the taper (that is, the rate at which the diameter changes over the tapered portion) may be larger or smaller than that shown in Figures 1a and 1b. The edge of the insulating member 13 that is disposed on the predefined outer surface region 123 (that is, the edge of the insulating member 13 nearest the head end of the fastener 10) is correspondingly and oppositely tapered, such that there are no gaps between this edge of the insulating member 13 and the tapered portion of the sleeve member 12. It is desirable to avoid air gaps within the bore, as any such gaps can potentially cause sparking in the event of a lightning strike to the fastener 10 or the structure in which it is installed. Providing a tapered or chamfered profile where the edge of the insulating member 13 abuts the sleeve member 12 may facilitate the avoidance of air gaps at this location within the bore.

More generally, the predefined outer surface region 123 of the sleeve member 12 comprises a surface feature shaped to match the shape of the edge of the insulating member 13 that is disposed on the predefined outer surface region 13. In the particular example of Figures 1a and 1b, this surface feature is a taper. However; various other forms of surface feature are possible according to the invention. Figures 2a and 2b show two possible configurations for such alternative surface features. In each example the surface feature on the sleeve member 12 and the corresponding edge of the insulating member 13 are mutually configured to maintain close contact therebetween, during and after installation of the blind fastener. In some examples the surface feature and the corresponding edge are mutually configured to resist relative axial and/or rotational movement of the sleeve member 12 and insulating member 13.

Figures 2a and 2b are partial cross-sections through two different example blind fasteners 20a, 20b according to the invention. Each fastener 20a, 20b comprises a bolt member, a sleeve member and an insulating member, each of which is identical to the corresponding member of the example blind fastener 10 except for the differences explicitly described below. Features shown in Figures 2a and 2b which are identical to features shown in Figures 1a and 1b have been given the same reference numbers and will not be further described. The fastener sections visible in Figures 2a and 2b each include a part of the predefined outer surface region of the respective sleeve member which has a surface feature configured to match an edge of the respective insulating member, and the matching edge of the respective insulating member. The differentiating features of the example blind fasteners 20a and 20b may be applied to any other blind fastener according to the invention.

The example blind fastener 20a of Figure 2a has a sleeve member 22 with a predefined outer surface region 223 on which a surface feature 224 is present. In this particular example, the surface feature 224 is a step. That is, the diameter of the predefined outer surface region changes abruptly from a smallest diameter (which is the diameter of the sub-region *r₁*) to a largest diameter (which is the diameter of the sub-region *r₂*) at the location of the step 224. The difference in diameter between the smallest diameter and the largest diameter is equal to the thickness of an insulating member 23 of the fastener 20a. The end face of the step 224 is substantially perpendicular to the outer surface of the sleeve member 22. The edge of the insulating member 23 which is disposed on the predefined outer surface region 223 and which is visible on Figure 2a matches the step 224, in that its thickness is equal to the height of the step 224 and in that its end face is substantially perpendicular to the outer surface of the insulating member 23 (and to the outer surface of the sleeve member 22). The step 224 extends continuously around the sleeve member 22, such that it forms a complete circumference. In some examples the axial location of the step may vary around the circumference of the fastener 20a - for example such that the step creates a crenelated or wavy boundary between the first and second sub-regions *r₁, r₂.* Such an arrangement may advantageously resist relative rotation of the sleeve member 22 and insulating member 23. The same principle may also be applied to the tapered surface feature and edge of the example fastener 30.

The example blind fastener 20b of Figure 2b is identical to the example blind fastener 20a of Figure 2a, except that the sleeve member 22 and insulating member 23 additionally comprise interlocking features 225, 235 configured to resist relative axial movement of the insulating member 23 and the sleeve member 13. The interlocking feature 225 on the sleeve member 22 is disposed on the first sub-region *r₁* of the predefined outer surface region 223, and the interlocking feature 235 on the insulating member 23 is disposed on the inner surface of the insulating member, at a location which is adjacent the sleeve member interlocking feature 225.

In the illustrated example, the sleeve member interlocking feature 225 is a circumferential protrusion. The protrusion 225 has a height that is less than the thickness of the insulating member 13. The height of the illustrated protrusion 225 is approximately equal to half the thickness of the insulating member 23. The insulating member interlocking feature 235 is a circumferential recess having a depth substantially equal to the height of the protrusion 225. The shape of the recess 235 matches the shape of the protrusion, such that the protrusion 225 can be received in the recess 235 without any air gaps being present therebetween. In the illustrated example the protrusion 225 and recess 235 each have a square profile, although any other matching profile shapes are possible. In some examples multiple corresponding protrusions 225 and recesses 235 may be provided around the circumference of the fastener 20b, with each matching protrusion-recess pair extending only partway around the circumference. Such an arrangement may advantageously provide improved resistance to relative rotation of the insulating member 23 and sleeve member 22.

Figures 3a and 3b illustrate a further alternative configuration for a blind fastener according to the invention. The example blind fastener 30 is shown in a pre-installation configuration in Figure 3a, and in a post-installation configuration (installed in bore formed in a structure made up of two sub-structures 14 and 15) in Figure 3b. The blind fastener 30 is substantially identical to the example blind fastener 10 of Figures 1a and 1b, except for the differences explicitly described below. Features of the blind fastener 30 which are identical to features of the blind fastener 10 have been given the same reference numbers and will not be further described. The differentiating features of the example blind fastener 30 may be applied to any other blind fastener according to the invention.

The blind fastener 30 differs from the blind fastener 10 in that the insulating member 33 of the fastener 30 has a different configuration to the insulating member 13 (although the material properties are the same). In particular, the insulating member 33 has the form of a cap. That is, the tail end of the insulating member 33 is closed such that the tail end of the bolt member 11 and the tail end of the sleeve member 12 are each enclosed within the insulating member 33. The axial length of the insulating member 33 is also greater than the axial length of the tubular insulating member 13, in order to contain the tail end of the bolt member 11. As can be seen from Figure 3a, the insulating member 33 extends some distance downwardly from the tail end of the bolt member 11 in the pre-installation configuration of the fastener 30. In particular, a gap is present between the base of the insulating member 13 and the base of the bolt member 11. This gap has an axial length greater than or equal to the relative axial displacement of the tail end of the sleeve member 12 and the bolt member 11 that is expected to take place during installation of the fastener 30, and is provided in order to accommodate the relative axial movement of the tail end of the sleeve member 12 and bolt member 11 during installation of the fastener 30. Other examples are possible in which the material of the insulating member 33 is sufficiently elastic that this relative axial movement of the bolt member 11 and tail end of the sleeve member 12 can be accommodated partly or entirely by stretching of the insulating member 13. In such examples the axial length of the insulating member 33 may be less than the relative axial displacement of the tail end of the sleeve member 12 and the bolt member 11 that is expected to take place during installation of the fastener 30.

Installation of a blind fastener according to the invention will now be explained with reference to the example fastener 10 of Figures 1a and 1b. However; the same installation process is applicable to all blind fasteners according to the invention.

To install the blind fastener 10 in a bore, the fastener 10 is inserted into the bore in the pre-installation configuration, until the head 121 of the sleeve member 12 abuts an outer surface of a structure in which the bore is formed. During the process of installing the blind fastener 10, the sleeve member 12 is substantially prevented, in any suitable manner, from rotating relative to the structure in which the bore is formed. Since the insulating member 13 is fixed to the sleeve member 12, the insulating member is also prevented from rotating during installation of the fastener 10. Meanwhile, the bolt member 11 is rotated (e.g. using an installation tool such as a wrench) relative to the structure and relative to the sleeve member 12. The heads 111, 121 of the bolt member 11 and the sleeve member 12 may each comprise features configured to engage with an installation tool, to facilitate the rotation, or prevention thereof, of the respective member.

The direction of rotation of the bolt member 11 is selected in dependence on the configuration of the screw thread. Assuming a standard screw thread, the bolt member 11 is rotated clockwise when installing the fastener 10. This relative rotation of the bolt member 11 and sleeve member 12 urges the tail end of the sleeve member 12 toward the head end of the fastener 10. The head end of the sleeve member 12 cannot move relative to the bolt member 11 when the bolt member 11 is rotated, since the top surface of the head 121 of the sleeve member 12 abuts the lower surface of the head 111 of the bolt member 11. Consequently, the urging of the tail end of the sleeve member 12 toward the head end of the fastener 10 causes axial compression of the sleeve member 12. The sleeve member 12 is configured to deform into the deformed shape shown in Figure 1b in response to being axially compressed. The screw threads and heads 111, 121 are configured such that enough torque can be applied to generate an axial compressive force that is sufficient to deform the sleeve member 12 into the deformed shape shown in Figure 1b.

The particular example blind fastener 10 comprises a deformable section 122, and this deformable section 122 is configured to deform in a predetermined manner in response to being axially compressed, as explained above. In particular, the compressive force generated by rotating the bolt member 11 relative to the sleeve member 12 causes the deformable section 122 of the sleeve member 12 to buckle radially outwardly, into the shape shown in Figure 1b.

As the sleeve member 12 deforms, the tail end of the sleeve member 12 moves axially relative to the bolt member 11, toward the head end of the bolt member 11. The tail end of the insulating member 13 moves together with the tail end of the sleeve member 12, and the insulating member 13 deforms together with the sleeve member 12. In the pre-installation configuration, the tail end of the sleeve member 12 has a first axial position relative to the bolt member 11. In particular, the tail end of the sleeve member 12 is relatively further (as compared to the post-installation configuration) from the head 111 of the bolt part 11. In the post-installation configuration, the tail end of the sleeve member 12 has a second, different axial position relative to the bolt member 11. In particular, the tail end of the sleeve member 12 is relatively closer to the head 111 of the bolt member 11.

Once the sleeve member 12 has been fully deformed, rotation of the bolt member 11 is ceased. In some examples, the fastener 10 may comprise a feature which prevents further relative rotation of the bolt member 11 and sleeve member 12 once full deformation has been achieved (for example the head 111 may shear off from the stem of the bolt member 11 when a predetermined torque is reached). Once full deformation of the sleeve member 12 has been achieved, the fastener 10 is in the post-installation configuration shown in Figure 1b. The structure in which the bore is formed is then clamped between the head 121 and the deformed section 122 of the sleeve member 12. Where the structure comprises multiple sub-structures as shown in Figure 1b, these substructures are thereby held together against axial separation. It can be seen from Figure 1b that the sleeve member 12 is prevented from directly contacting the lower surface of the structure, because the insulating member 13 is disposed between the sleeve member 12 and the structure. It will be appreciated that this arrangement results as a necessary consequence of the configuration of the blind fastener 10, and that no special effort or care is required during installation of the fastener 10 is needed to ensure that the insulating member 13 becomes disposed between the sleeve member 12 and the structure.

Figure 4 is a cross-section through a fuel tank 400. The fuel tank 400 comprises a first sub-structure 404a and a second sub-structure 404b, which are fastened together by a blind fastener 40 according to the invention. The fuel tank 400 is shown schematically, and not to scale. In particular, the fastener 40 is shown being significantly larger in relation to the rest of the fuel tank than would likely be the case in a real-world application, for ease of depiction.

The illustrated blind fastener 40 is of the same design as the example fastener 10 of Figures 1a-b, although it could be any blind fastener according to the invention. The first sub-structure 404a is a first end of a unitary fuel tank wall component 404, and the second sub-structure 404b is a second end of that unitary fuel tank wall component. However, other examples are possible in which the first and second sub-structures 404a, 404b are comprised in separate components. The first and second sub-structures 404a, 404b may have any of the features of the example first and second sub-structures 14, 15 described above. The fuel tank wall component 404 is configured such that, when the first and second sub-structures 404a, 404b are fastened together, it defines an enclosed space 406 suitable for the storage of fuel. The enclosed space 406 may be referred to as a fuel-containing space (even though in some operational states of the fuel tank no fuel may actually be contained therein). In some examples the first and second sub-structures 404a, 404b may be fastened together by a plurality of blind fasteners 40 according to the invention. In some examples the fuel tank 400 is an aircraft fuel tank.

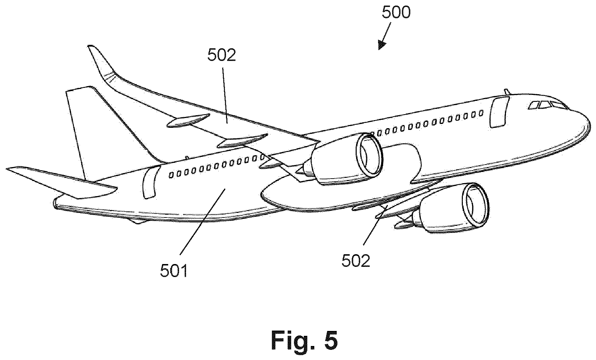

Figure 5 shows an example aircraft 500 comprising a blind fastener (not visible) according to the invention. The aircraft 500 has a pair of wings 502 attached to a fuselage 501. Each wing 502 comprises a structural wing box formed by a front spar, a rear spar, an upper cover panel and a lower cover panel. Any two or more of the wing box components may be integrally formed. At least some of the joints between wing box components may comprise one or more blind fasteners according to the invention. Each wing box at least partially defines a fuel-containing space, and may therefore have any of the features of the example fuel tank 400 of Figure 4. Where a joint between wing box components forms part of a wall of a fuel-containing space, any fasteners comprised in that joint which extend into the fuel-containing space may advantageously be blind fasteners according to the invention (such as the example blind fastener 10 or the example blind fastener 30 described above). The aircraft 500 may additionally comprise one or more further fuel tanks. Any such further fuel tanks may comprise sub-structures fastened together by one or more blind fasteners according to the invention. The illustrated aircraft is a commercial airliner, but the discussion above applies equally to any other type of aircraft, or indeed any other vehicle, which comprises a fuel-containing space defined by fastened-together sub-structures.

Although the invention has been described above with reference to one or more preferred examples or embodiments, it will be appreciated that various changes or modifications may be made without departing from the scope of the invention as defined in the appended claims.

Although the invention has been described above mainly in the context of a fixed-wing aircraft application, it may also be advantageously applied to various other applications, including but not limited to applications on vehicles such as helicopters, drones, trains, automobiles and spacecraft.

Where the term "or" has been used in the preceding description, this term should be understood to mean "and/or", except where explicitly stated otherwise.

## Claims

1. A blind fastener (10) configured to be installed in a bore of a given length, the blind fastener comprising:
a sleeve member (12) configured to deform during installation of the blind fastener, the sleeve member having a predefined outer surface region (123) that is arranged to be disposed within the bore after installation of the blind fastener;
a bolt member (11) at least partially received within the sleeve member; and
an electrically insulating member (13) fixedly disposed on the sleeve member,
wherein the insulating member and the sleeve member are mutually configured such that the insulating member is present on a first sub-region (r1) of the predefined outer surface region and is not present on a second sub-region (r2) of the predefined outer surface region, each of the first and second sub-regions comprising a complete circumference of the sleeve member, wherein the bolt member (11) has a head end (111), on which a head is formed; and the second sub-region (r2) is relatively nearer to the head end of the bolt member than the first sub-region (r1).

2. A blind fastener (10) according to claim 1, wherein the first sub-region (r1) is relatively nearer to a tail end (112) of the blind fastener.

3. A blind fastener (10) according to claim 1 or claim 2, wherein a diameter (D1) of the first sub-region (r1) is smaller than the diameter (D2) of the second sub-region (r2), by an amount substantially equal to a thickness of the insulating member. (13)

4. A blind fastener (10) according to any preceding claim, wherein a diameter (D2) of the second-sub region (r2) is substantially equal to an outer diameter of the insulating member (13).

5. A blind fastener (10) according to any preceding claim, wherein the sleeve member (12) has a deformable section (122) that is configured to deform during installation of the blind fastener.

6. A blind fastener (10) according to any preceding claim, wherein the blind fastener is moveable between a pre-installation configuration in which the sleeve member (12) is undeformed and a tail end of the sleeve member has a first axial position relative to the bolt member (11), and a post-installation configuration in which the sleeve member is deformed and the tail end of the sleeve member has a second, different axial position relative to the bolt member.

7. A blind fastener (10) according to any preceding claim, wherein the predefined outer surface region (123) of the sleeve member (12) comprises a surface feature (224) shaped to match the shape of an edge of the insulating member (13) which is disposed on the predefined outer surface region (223).

8. A blind fastener (10) according to any preceding claim, wherein a top surface of a head (121) of the sleeve member (12) abuts a lower surface of a head (111) of the bolt member (11).

9. An assembly comprising:
a structure (404) having a bore connecting a first side of the structure to a second side of the structure; and
a blind fastener (40) according to any of claims 1 to 8 installed in the bore.

10. An assembly according to claim 9, wherein an end part of the insulating member (13) nearest the head end (111) of the blind fastener (40) is disposed within the bore.

11. An assembly according to any of claims 9 to 10, wherein the structure (404) comprises a first sub-structure (404a) and a second-substructure (404b) fastened together by the blind fastener.

12. An assembly according to claim 11 wherein a head (111) of the blind fastener abuts the first sub-structure (404a) and a tail of the blind fastener (112) abuts the second sub-structure (404b), and wherein an axial length of the first sub-region is less than a thickness of the second sub-structure.

13. A fuel tank comprising a blind fastener according to any of claims 1 to 8, and/or an assembly according to any of claims 9 to 12.

14. An aircraft (500) comprising a blind fastener according to any of claims 1 to 8, an assembly according to any of claims 9 to 12, or a fuel tank (400) according to claim 13.

## Patentansprüche

1. Blindbefestigung (10), die dazu ausgelegt ist, in einer Bohrung mit einer vorgegebenen Länge eingebaut zu werden, wobei die Blindbefestigung Folgendes umfasst:
ein Hülsenelement (12), das dazu ausgelegt ist, sich während des Einbaus der Blindbefestigung zu verformen, wobei das Hülsenelement einen festgelegten Außenflächenbereich (123) aufweist, der dazu angeordnet ist, nach dem Einbau der Blindbefestigung innerhalb der Bohrung angeordnet zu sein;
ein Bolzenelement (11), das zumindest teilweise innerhalb des Hülsenelements aufgenommen ist; und
ein Elektroisolierelement (13), das fest am Hülsenelement angeordnet ist,
wobei das Isolierelement und das Hülsenelement beide derart ausgelegt sind, dass das Isolierelement in einem ersten Teilbereich (r1) des festgelegten Außenflächenbereichs vorhanden ist und in einem zweiten Teilbereich (r2) des festgelegten Außenflächenbereichs nicht vorhanden ist, wobei der erste und zweite Teilbereich jeweils einen vollständigen Umfang des Hülsenelements umfassen, wobei das Bolzenelement (11) ein Kopfende (111) aufweist, an dem ein Kopf ausgebildet ist und wobei der zweite Teilbereich (r2) näher am Kopfende des Bolzenelements angeordnet ist als der erste Teilbereich (r1).

2. Blindbefestigung (10) nach Anspruch 1, wobei der erste Teilbereich (r1) näher am hinteren Ende (112) der Blindbefestigung angeordnet ist.

3. Blindbefestigung (10) nach Anspruch 1 oder Anspruch 2, wobei der Durchmesser (D1) des ersten Teilbereichs (r1) um einen Betrag, der im Wesentlichen der Stärke des Isolierelements (13) entspricht, kleiner ist als der Durchmesser (D2) des zweiten Teilbereichs (r2).

4. Blindbefestigung (10) nach einem der vorstehenden Ansprüche, wobei der Durchmesser (D2) des zweiten Teilbereichs (r2) im Wesentlichen gleich dem Außendurchmesser des Isolierelements (13) ist.

5. Blindbefestigung (10) nach einem der vorstehenden Ansprüche, wobei das Hülsenelement (12) einen verformbaren Abschnitt (122) aufweist, der dazu ausgelegt ist, sich während des Einbaus der Blindbefestigung zu verformen.

6. Blindbefestigung (10) nach einem der vorstehenden Ansprüche, wobei die Blindbefestigung zwischen einer Voreinbaukonfiguration, in der das Hülsenelement (12) nicht verformt ist und das hintere Ende des Hülsenelements eine erste Axialposition in Bezug zum Bolzenelement (11) aufweist, und einer Nacheinbaukonfiguration, in der das Hülsenelement verformt ist und das hintere Ende des Hülsenelements eine zweite, andere Axialposition in Bezug zum Bolzenelement aufweist, beweglich ist.

7. Blindbefestigung (10) nach einem der vorstehenden Ansprüche, wobei der festgelegte Außenflächenbereich (123) des Hülsenelements (12) ein Oberflächenmerkmal (224) umfasst, das geformt ist, um zur Form einer Kante des Isolierelements (13) zu passen, das am festgelegten Außenflächenbereich (223) angeordnet ist.

8. Blindbefestigung (10) nach einem der vorstehenden Ansprüche, wobei eine Deckfläche eines Kopfes (121) des Hülsenelements (12) an einer Bodenfläche eines Kopfes (111) des Bolzenelements (11) anliegt.

9. Anordnung, Folgendes umfassend:
eine Struktur (404) mit einer Bohrung, die eine erste Seite der Struktur mit einer zweiten Seite der Struktur verbindet; und
eine Blindbefestigung (40) nach einem der Ansprüche 1 bis 8, die in der Bohrung eingebaut ist.

10. Anordnung nach Anspruch 9, wobei ein Endteil des Isolierelements (13) am nächsten am Kopfende (111) der Blindbefestigung (40) innerhalb der Bohrung angeordnet ist.

11. Anordnung nach einem der Ansprüche 9 bis 10, wobei die Struktur (404) eine erste Teilstruktur (404a) und eine zweite Teilstruktur (404b) umfasst, die durch die Blindbefestigung aneinander befestigt sind.

12. Anordnung nach Anspruch 11, wobei ein Kopf (111) der Blindbefestigung an der ersten Teilstruktur (404a) anliegt und ein hinteres Ende der Blindbefestigung (112) an der zweiten Teilstruktur (404b) anliegt und wobei die axiale Länge des ersten Teilbereichs kürzer ist als die Stärke der zweiten Teilstruktur.

13. Treibstofftank, umfassend eine Blindbefestigung nach einem der Ansprüche 1 bis 8 und/oder eine Anordnung nach einem der Ansprüche 9 bis 12.

14. Flugzeug (500), umfassend eine Blindbefestigung nach einem der Ansprüche 1 bis 8, eine Anordnung nach einem der Ansprüche 9 bis 12 oder einen Treibstofftank (400) nach Anspruch 13.

## Revendications

1. Fixation aveugle (10) conçue pour être installée dans un orifice d'une longueur donnée, la fixation aveugle comprenant :
un élément formant douille (12) conçu pour se déformer lors de l'installation de la fixation aveugle, l'élément formant douille comportant une région de surface extérieure prédéfinie (123) qui est conçue pour être disposée à l'intérieur de l'orifice après l'installation de la fixation aveugle ;
un élément formant vis (11) au moins partiellement reçu à l'intérieur de l'élément formant douille ; et
un élément électriquement isolant (13) disposé fixement sur l'élément formant douille,
dans laquelle l'élément isolant et l'élément formant douille sont mutuellement conçus de telle sorte que l'élément isolant est présent sur une première sous-région (r1) de la région de surface extérieure prédéfinie et n'est pas présent sur une seconde sous-région (r2) de la région de surface extérieure prédéfinie, chacune des première et seconde sous-régions comprenant une circonférence entière de l'élément formant douille, dans laquelle l'élément formant vis (11) comporte une extrémité de tête (111), sur laquelle est formée une tête ; et la seconde sous-région (r2) est située relativement plus près de l'extrémité de tête de l'élément formant vis que la première sous-région (r1).

2. Fixation aveugle (10) selon la revendication 1, dans laquelle la première sous-région (r1) est située relativement plus près d'une extrémité de queue (112) de la fixation aveugle.

3. Fixation aveugle (10) selon la revendication 1 ou la revendication 2, dans laquelle un diamètre (D1) de la première sous-région (r1) est inférieur au diamètre (D2) de la seconde sous-région (r2), dans une mesure sensiblement égale à une épaisseur de l'élément isolant (13) .

4. Fixation aveugle (10) selon l'une quelconque des revendications précédentes, dans laquelle un diamètre (D2) de la seconde sous-région (r2) est sensiblement égal à un diamètre extérieur de l'élément isolant (13).

5. Fixation aveugle (10) selon l'une quelconque des revendications précédentes, dans laquelle l'élément formant douille (12) comporte une section déformable (122) qui est conçue pour se déformer lors de l'installation de la fixation aveugle.

6. Fixation aveugle (10) selon l'une quelconque des revendications précédentes, la fixation aveugle étant déplaçable entre une configuration pré-installation, dans laquelle l'élément formant douille (12) n'est pas déformé et une extrémité de queue de l'élément formant douille se trouve dans une première position axiale relativement à l'élément formant vis (11), et une configuration post-installation, dans laquelle l'élément formant douille est déformé et l'extrémité de queue de l'élément formant douille se trouve dans une seconde position axiale différente relativement à l'élément formant vis.

7. Fixation aveugle (10) selon l'une quelconque des revendications précédentes, dans laquelle la région de surface extérieure prédéfinie (123) de l'élément formant douille (12) comprend un élément de surface (224) dont la forme est prévue pour correspondre à la forme d'un bord de l'élément isolant (13) qui est disposé sur la région de surface extérieure prédéfinie (223).

8. Fixation aveugle (10) selon l'une quelconque des revendications précédentes, dans laquelle une surface supérieure d'une tête (121) de l'élément formant douille (12) vient en butée contre une surface inférieure d'une tête (111) de l'élément formant vis (11).

9. Ensemble comprenant :
une structure (404) comportant un orifice raccordant un premier côté de la structure à un second côté de la structure ; et
une fixation aveugle (40) selon l'une quelconque des revendications 1 à 8 installée dans l'orifice.

10. Ensemble selon la revendication 9, dans lequel une partie d'extrémité de l'élément isolant (13) située le plus près de l'extrémité de tête (111) de la fixation aveugle (40) est disposée à l'intérieur de l'orifice.

11. Ensemble selon l'une ou l'autre des revendications 9 et 10, dans lequel la structure (404) comprend une première sous-structure (404a) et une seconde sous-structure (404b) attachées l'une à l'autre par la fixation aveugle.

12. Ensemble selon la revendication 11, dans lequel une tête (111) de la fixation aveugle vient en butée contre la première sous-structure (404a) et une queue (112) de la fixation aveugle vient en butée contre la seconde sous-structure (404b), et dans lequel une longueur axiale de la première sous-région est inférieure à une épaisseur de la seconde sous-structure.

13. Réservoir à carburant comprenant une fixation aveugle selon l'une quelconque des revendications 1 à 8, et/ou un ensemble selon l'une quelconque des revendications 9 à 12.

14. Aéronef (500) comprenant une fixation aveugle selon l'une quelconque des revendications 1 à 8, un ensemble selon l'une quelconque des revendications 9 à 12, ou un réservoir à carburant (400) selon la revendication 13.
